# FASCICULE DE BREVET EUROPEEN

(11) **EP 3 899 392 B1**
(45) Date de publication et mention de la délivrance du brevet: **10.01.2024**
(21) Numéro de dépôt: 19832310.7
(22) Date de dépôt: 16.12.2019
(51) Int. Cl.: F26B 21/14, F26B 9/06, F26B 21/06, F26B 25/22

(54) **PROCÉDÉ DE SÉCHAGE THERMIQUE DU BOIS SOUS ATMOSPHÈRE DE CO2, INSTALLATION DE SÉCHAGE POUR LA MISE EN OEUVRE DUDIT PROCÉDÉ ET PRODUIT OBTENU**
VERFAHREN ZUR THERMISCHEN TROCKNUNG VON HOLZ IN EINER CO2-ATMOSPHÄRE, TROCKNUNGSANLAGE ZUR DURCHFÜHRUNG DES VERFAHRENS UND ERHALTENES PRODUKT
METHOD FOR THERMALLY DRYING WOOD IN A CO2 ATMOSPHERE, DRYING FACILITY FOR CARRYING OUT SAID METHOD AND PRODUCT OBTAINED

(30) Priorité: 19.12.2018 FR 1873302
(43) Date de publication de la demande: 27.10.2021
(73) Titulaire: Ways SAS, 77920 Samois-Sur-Seine (FR)
(72) Inventeur: RAOULT, Yann, 77920 SAMOIS SUR SEINE (FR)
(74) Mandataire: Nicolle, Olivier
(86) Numéro de dépôt international: PCT/EP2019/085318
(87) Numéro de publication internationale: WO 2020/127026

(56) Documents cités:
- EP-A1- 2 196 295
- WO-A1-2005/116551
- WO-A1-2016/162591
- CN-A- 106 643 012
- DE-A1- 10 345 968
- FR-A1- 2 786 426
- JP-A- 2005 180 746
- US-A1- 2014 237 843

## Description

La présente invention concerne un procédé de séchage thermique de bois sous atmosphère CO₂, en particulier mais non limitativement pour le séchage industriel du bois d'oeuvre, bois rond et/ou en grumes. Elle concerne également une installation pour la mise en oeuvre dudit procédé de séchage et le produit obtenu.

On entend ici par « bois d'oeuvre, bois rond et bois en grumes » le bois destiné à l'emploi dans les filières de seconde transformation du bois, notamment pour l'industrie, le bâtiment, la menuiserie, ou pour l'aménagement extérieur et intérieur urbain, industriel, collectif et domestique.

Bien que différentes solutions pour le séchage du bois d'oeuvre, bois rond et/ou en grumes existent, les solutions connues ne permettent que rarement une application industrielle associée à un bilan énergétique faible. En effet, les solutions connues sont généralement utilisées à petite échelle, en raison du problème de consommer un minimum d'énergie tout en obtenant un bois comportant un pourcentage d'eau faible.

Un autre inconvénient des solutions existantes est la durée du procédé de séchage, qui représente souvent une durée importante de plusieurs jours, facteur limitant une utilisation efficace pour un usage industriel.

De plus, les procédés actuels sont trop souvent en difficulté pour atteindre l'objectif qui est d'élever la température de manière à ce qu'elle soit homogène jusqu'au coeur d'une masse de bois, tout en obtenant une humidité résiduelle faible du bois séché et en garantissant l'intégrité de la structure interne du bois pendant et après le séchage.

Enfin, les procédés de séchage actuels sont généralement mis en oeuvre pour du bois conformé en planches, ou préalablement réduit, ceci impliquant un transport du bois, ainsi qu'une transformation lourde avant séchage.

Document EP2196295A1 divulgue un procédé de séchage thermique de bois selon le préambule de la revendication 1.

La présente invention remédie à ces inconvénients.

Elle porte sur un procédé de séchage thermique de bois mis en oeuvre à l'aide d'une installation de séchage comprenant au moins une chambre de séchage.

Selon une définition générale de l'invention, le procédé de séchage comprend les étapes suivantes :
- injecter à l'intérieur de la chambre de séchage (un gaz caloporteur comprenant du CO₂ à pression et température choisies;
- forcer la circulation du gaz caloporteur à travers la chambre de séchage ;
- réchauffer le gaz caloporteur circulant dans la chambre de séchage selon une première phase amenant la température moyenne de la chambre de séchage depuis la température ambiante jusqu'à 80°C selon un gradient de température choisi afin d'extraire l'eau libre du bois, puis une seconde phase depuis 80°C jusqu'à 140°C en fonction du profil de séchage spécifique du bois à sécher, lequel comprenant un profil d'augmentation de température spécifique et permettant d'extraire l'eau liée spécifique du bois à sécher;
- extraire hors de la chambre de séchage le mélange gazeux binaire comprenant du CO₂ et de l'eau sous forme de vapeur à température élevée et évacuer, l'eau ainsi extraite de la charge de bois hors de la chambre ;
- piloter les étapes d'injection, de circulation, de réchauffage, et d'évacuation selon des programmes, valeurs consignes et des durées de séchage appropriés selon la courbe spécifique d'évolution hygrométrique au coeur du bois en fonction du temps de séchage et des séquençages de l'augmentation de la température propres au type de bois à sécher; et
- collecter l'ensemble des données formées par les variations de mesures physiques métrologiques, les comparer aux valeurs consignes dictés par le profil spécifique du bois à sécher, et réajuster le fonctionnement de l'installation de séchage en cas d'écart avec les valeurs consignes.

Ainsi, le procédé de séchage permet d'obtenir un séchage rapide du bois, lequel est aussi énergétiquement moins demandeur, et permet d'obtenir un taux d'humidité du bois ainsi séché inférieur à 5 % d'humidité tout en permettant une adaptabilité à tout type de bois grâce aux étapes de surveillance, de contrôle et de rétro ajustement.

Le procédé de séchage utilise une génération de flux gazeux caloporteur de CO₂ injecté dans la chambre de séchage de la charge de bois à pression atmosphérique, suivi d'un chauffage en boucle fermée en deux temps et graduel jusqu'à une valeur cible, avec un système de surveillance de nombreuses mesures physiques parmi lesquelles l'enregistrement de la pression, l'hygrométrie, la température, la masse de la chambre de séchage en différents points et reliés à une boucle de rétroaction permettant l'ajustement du fonctionnement de l'installation pour obtenir les conditions optimales de séchage du bois.

Un tel procédé de séchage a l'avantage d'être court sur le plan temporel, reproductible à grande échelle pour son usage industriel, énergétiquement efficient et permet d'obtenir un pourcentage en eau du bois séché inférieur ou égal à 5%, à température modérée.

Le type de bois adapté au procédé et son dispositif de mise en oeuvre appartient au groupe formé par les bois ronds, grumes, bois d'oeuvre, et bois conformé en planches.

Le procédé conforme à l'invention comporte une étape d'injection de CO₂, laquelle consiste en l'extraction de l'air atmosphérique de la chambre de séchage 1, l'injection de CO₂ à débit choisi, suivi du démarrage de recirculation continue à bas régime. L'étape d'injection de CO₂ se poursuit par l'enregistrement et le comptage du taux de renouvellement de l'atmosphère CO₂ dans la chambre 1, et enfin réduire le débit d'injection de CO₂ jusqu'à une valeur consigne tout en montant le régime recirculation continue du CO₂ jusqu'à l'obtention d'un débit nominal.

Selon un mode particulier de réalisation de l'invention, le procédé de séchage comprend aussi une étape de recyclage du CO₂, permettant la récupération du CO₂ à partir du mélange gazeux vapeur d'eau/ CO₂ extrait de la chambre (1) lors du séchage.

En pratique, l'étape de réchauffage comprend les sous étapes suivantes :
- démarrer le programme thermostatique de commande de chauffe ;
- augmenter la température du tube de séchage de la température ambiante à 80°C pendant 10 heures (6°C/h) ;
- augmenter la température du tube de séchage de 80°C à 140° pendant 60 heures (1 °C/h) ;
- vérifier la pression interne, la pression partielle en eau et CO₂, la température de la charge de bois au niveau de son aubier et son duramen, la température de l'atmosphère dans la chambre de séchage , la masse du tube de la chambre de séchage, l'hygrométrie, le débit et volume de CO₂, et le taux de renouvellement de l'atmosphère CO₂ en tout temps du chauffage et moduler le paramètre adéquat pour maintenir des valeurs consignes ; et
- arrêter le chauffage lorsque l'l'hygrométrie du bois a atteint une valeur cible ou que la température moyenne de la chambre de séchage atteint 140°C.

L'étape de chauffage conforme à l'invention est réalisée à pression atmosphérique, avec un pourcentage massique de CO₂ gazeux dans la chambre devant être compris entre 95% et 100%.

En pratique l'étape de séchage comporte les sous-étapes suivantes :
- diminuer la température de la chambre
- arrêter l'alimentation en CO₂ lorsque la température du bois est inférieure à 60°C ;
- arrêter le système de recirculation continue du CO₂ ;
- extraire complètement l'atmosphère interne de la chambre de séchage (1) ;
- arrêter les enregistrements de mesures physiques de l'installation ; et
- arrêter et mettre en veille

A titre d'exemple non limitatif, le taux d'humidité cible du bois séché par la mise en oeuvre du procédé est inférieur ou égal à 5%.

L'invention a également pour objet une installation de séchage pour la mise en oeuvre du procédé de séchage conforme à l'invention.

D'autres avantages et caractéristiques de l'invention apparaitront à l'examen de la description et des dessins dans lesquels :
**[****Fig 1****]** représente schématiquement une installation de séchage de bois conforme à l'invention ;
[Fig 2] représente isolément le système de chauffage conforme à l'invention ;
[Fig 3] représente un module thermoplongeur interne du système de chauffage conforme à l'invention ;
[Fig 4] représente un ventilateur à simple aspiration du système de chauffage conforme à l'invention ;
[Fig 5] représente schématiquement les étapes générales du procédé de séchage conforme à l'invention ;
[Fig 6] représente schématiquement les sous-étapes permettant la préparation à l'injection du CO2 et l'initialisation du séchage conforme à l'invention ;
[Fig 7] représente schématiquement les sous-étapes permettant de procéder à l'étape de chauffage et de terminaison du chauffage conformément à l'invention ; et
[Fig 8] représente schématiquement les sous-étapes permettant la fin du cycle de séchage ainsi que l'arrêt de l'installation conforme à l'invention.
[Fig 9] représente un profil hygrométrique particulier de l'évolution de l'humidité et des températures de l'atmosphère de la chambre de séchage en fonction du temps selon le procédé conforme à l'invention.
**[****Fig 10****]** représente plusieurs profils hygrométriques particuliers d'essences différentes représentant l'évolution de l'humidité moyenne du bois en fonction du temps et de la température de l'atmosphère de la chambre de séchage selon le procédé conforme à l'invention.

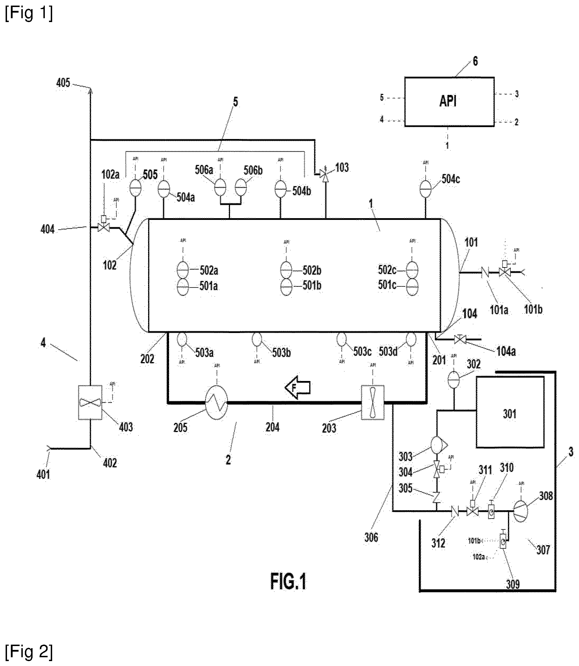

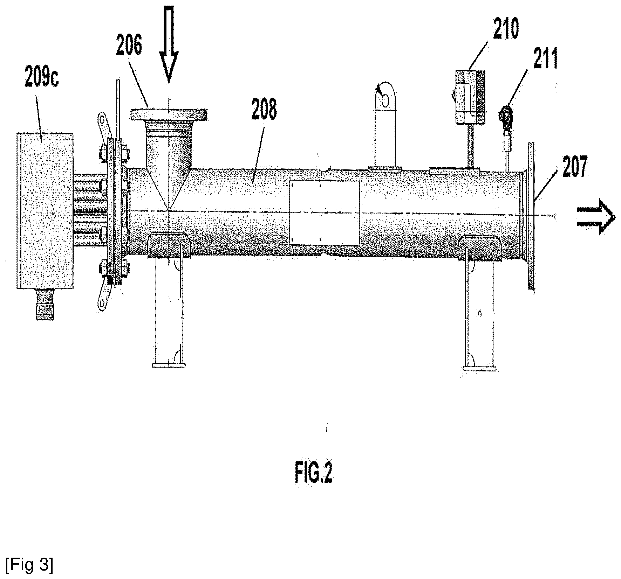

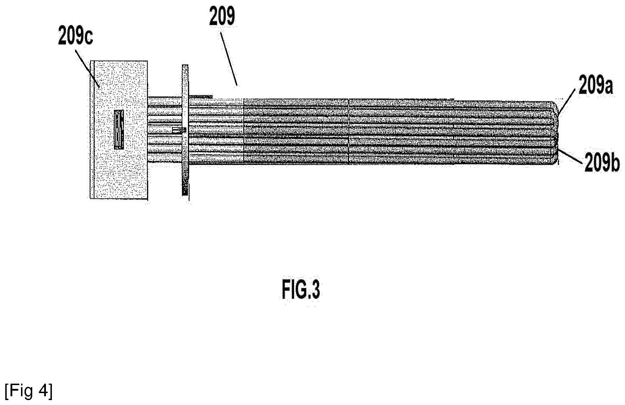

En référence aux **figures 1**, **2** **,****3** **et** **4****,** l'installation de séchage conforme à l'invention comprend plusieurs groupements fonctionnels parmi lesquels une chambre de chauffage 1 comportant au moins un tube de séchage dans laquelle le bois à sécher est introduit, au moins un système de chauffage 2 , au moins un système d'alimentation en CO₂ 3, au moins un système d'extraction d'atmosphère 4 permettant l'extraction de l'atmosphère intérieure de la chambre de séchage 1, plusieurs unités de mesure métrologiques 5, et enfin un système informatique de pilotage 6 équipé d'une interface de programmation applicative API.

Selon un mode de réalisation, l'installation possède une chambre de séchage 1 composée d'un ou plusieurs tubes de séchage cylindrique creux permettant l'introduction du bois rond à sécher. Cette chambre de séchage 1 comporte une entrée 101, laquelle est suivie d'un conduit dit de « respiration » comportant un clapet anti-retour 101a suivi d'une électrovanne de respiration 101b de la chambre 1, lequel permet l'injection d'air venant de l'extérieur de l'installation dans la chambre de séchage 1.

La chambre de séchage 1 comprend en outre une sortie 102 vers un système d'extraction 4, contrôlée par une électrovanne de sortie 102a, disposant aussi d'une sonde de température 505 et permettant l'extraction de l'atmosphère présente dans la chambre de séchage 1. Une soupape de sécurité 103 disposée en position médiale de la chambre de séchage 1, et reliée au conduit du système d'extraction 4, permet l'évacuation d'urgence d'une partie de l'atmosphère contenue dans la chambre de séchage 1 en cas de pression critique dans celle-ci. En pratique, la pression critique au niveau de la soupape peut être de 0.02 bar.

Enfin, la chambre de séchage comprend aussi des instruments de métrologie 5, permettant la mesure de diverses caractéristiques physiques. Les instruments compris au niveau de la chambre de séchage 1 sont par exemple :
- quatre pesons individualisés 503a/503b/ 503c/ 503d, répartis sous la chambre et permettant le suivi de la masse du tube de séchage, et ainsi connaitre la masse de la charge de bois en cours de séchage, indiquant l'état d'avancement du séchage ;
- six transmetteurs de température individualisés et placés sur le bois, dont trois disposés au centre de la grume 501a/501b/501c ainsi que trois placés à la périphérie de celle-ci 502a/502b/502c, permettant donc le suivi précis en temps réel de la température en plusieurs points de la chambre 1, ainsi que dans la charge de bois, afin d'éviter d'endommager la grume lors du séchage et optimiser le séchage par régulation fine ;
- trois ensembles hygromètre/thermomètre individualisés disposés en amont 504a, au centre 504b, et en aval 504c dans la chambre de séchage 1 ;
- un ensemble transmetteur de pression 506a et manomètre 506b permettant l'enregistrement de la pression à l'intérieur de la chambre de séchage 1.

Chaque mesure métrologique comporte une valeur consigne ou un groupe de valeurs consignes à respecter, spécifique à chaque type de bois.

A titre d'exemple non limitatif, la chambre de séchage 1 comporte un tube fermé de 2.000 litres calorifugé avec recirculation atmosphérique interne. Par exemple, le réacteur est constitué par :
- un tube d'acier de 5,5 mètres de longueur, fermé par deux plaques en acier (non représentées) de 700 mm de diamètre et 3 mm d'épaisseur, l'une boulonnée sur brides comportant 1 piquage de visite fermé par un plaque acier de 220 mm de diamètre boulonnée sur bride, et l'autre équipée en porte articulée boulonnée sur bride sur gougeons articulés, comportant un piquage de visite, et enfin fermé par un robinet/vanne ;
- un chemin de fer à rouleau (non représenté) composé d'une série de dix rouleaux de 4 cm de diamètre et de 15 cm de longueur espacés tous les 70 cm et fixés par plaque boulonnée ; et
- une extrémité filetée fermée par boulon-capuchon, pour la mise en place des capteurs, aux extrémités et au centre, fixé sur l'axe de la génératrice supérieure de la chambre.

L'installation de séchage comprend en outre un système de chauffage 2, équipé d'un conduit 204 comprenant une entrée 201 de circulation de gaz en provenance de la partie en amont de la chambre de séchage 1, le conduit 204 amenant ensuite à un système de recirculation continue 203 ou ventilateur de recirculation continue comportant une gaine 203a, une turbine 203b, ainsi qu'une entrée 203c et une sortie 203d permettant la circulation du mélange gazeux issu de la chambre 1 selon un sens F dans le système de chauffage 2, puis à un réchauffeur 205 ou cellule de réchauffage, lequel évacue l'atmosphère ainsi chauffée vers une sortie 202 donnant dans la chambre de séchage 1.

Selon un premier mode de réalisation alternatif, la chambre de séchage 1 est constituée d'une pluralité de tubes de séchage, connectés à un système de chauffage 2 commun aux tubes de séchage.

Selon un second mode de réalisation alternatif, la chambre de séchage 1 est constituée d'une pluralité de tubes de séchage, connectés à une pluralité de systèmes de chauffage 2.

En pratique, le réchauffeur 205 est de type thermoplongeur vendu sous la référence « réchauffeur électrique 237537 à tube plongeur » par la société VULCANICO d'une puissance de 7 W et comporte une entrée 206 par laquelle les gaz à chauffer entrent dans le réchauffeur 205, un conduit 208 cylindrique ouvert en acier, dans lequel un thermoplongeur 209 est inséré et fixé sur l'une des ouvertures, et enfin une seconde ouverture de sortie 207 des gaz ainsi chauffés. En aval du conduit 208 avant l'orifice de sortie 207 sont disposés un thermostat 210 permettant la régulation de la température du thermoplongeur 209 ainsi qu'une sonde de mesure de la température 211.

A titre d'exemple non limitatif, le système de chauffage 2 comporte un circuit en gaine spiralée, en tôle d'acier galvanisé d'environ 8 m de longueur, alimentant une caisse d'extraction réchauffage équipé d'un ventilateur 203 de type hélicoïde à moteur déporté basse pression de 9,5 Nm³/mn, ainsi qu'un réchauffeur 205 de 2 x 3,5 kW thermostaté, l'ensemble calorifugé par une enveloppe de laine de verre de 20 cm d'épaisseur.

En pratique, le ventilateur de recirculation continue 203 peut être de type ventilateur centrifuge moyenne pression et à simple aspiration avec gaine 203b et turbine 203a en tôle d'acier, ledit ventilateur comportant une turbine 203a à aubes inclinées vers l'avant en tôle d'acier galvanisé, le ventilateur 203 étant capable de supporter une température maximale de l'air à transporter de -20ºC à 250ºC.

L'installation de séchage comporte en outre un système d'alimentation 3 en CO₂, lequel comporte une source de CO₂ liquide anhydre, constituée par une "centrale d'approvisionnement en CO₂ " 301 comportant deux emplacements pour des obus standards type "Air-Liquide", contenant chacun 34 kg de CO₂ liquide comprimé à 50 bar, et le(s) dispositif(s) de détente correspondants, soit un dispositif de détente du CO₂ gazeux constitué d'un détendeur primaire (non représenté) permettant le passage de la pression de 70 bar à 3 bar (0,5 m³/h), d'un détendeur-régulateur de débit secondaire permettant le passage de la pression de 3 bar à 0,3 bar (5 m³/h). Le système d'alimentation 3 dispose ensuite d'une électrovanne 304 de coupure précédée d'un dispositif de comptage 302/303 atmosphérique du CO₂, l'électrovanne contrôlant l'alimentation vers une canalisation atmosphérique 306 fixe, le dispositif de comptage étant quant à lui constitué d'un ensemble manomètre/thermomètre 302 et volumètre/débitmètre 303. Le conduit d'alimentation du CO₂ injecté et décomprimé comporte ensuite un clapet anti-retour et rejoint enfin une canalisation de mise en circulation atmosphérique 306.

Le système d'alimentation 3 en CO₂ comporte ensuite un dispositif de mise en circulation 307 du gaz permettant de pulser de l'air à température ambiante vers le système de chauffage 2. Le dispositif de circulation 307 comprend un compresseur d'air 308 éjectant de l'air sous pression vers une canalisation se divisant en deux, et donc la première division permet la circulation de l'air comprimé vers un détendeur 309 lequel permet ensuite la circulation d'air à pression réduite vers les électrovannes 101b et 102a, respectivement présentes à l'entrée 101 et sortie 102 de la chambre de séchage 1. Une seconde division de la canalisation permet la circulation de l'air comprimé vers un détendeur 310 lequel réduit la pression de l'air injecté vers une électrovanne 311 permettant le contrôle de la quantité d'air introduit dans le circuit, lequel comporte ensuite un clapet anti-retour 312 et débouchant dans la canalisation de mise en circulation atmosphérique 306 laquelle rejoint le conduit 204 du système de chauffage 2 en amont du recirculateur 203.

Selon un mode alternatif de réalisation de l'invention, la canalisation de mise en circulation atmosphérique 306 rejoint directement au moins un tube de la chambre de séchage 1.

Selon un autre mode de réalisation alternatif, la source de CO₂ utilisée est du CO₂ recyclé directement à partir de la récupération et de l'épuration d'émissions par des cheminées d'usine.

L'installation de séchage comprend également un système d'extraction 4 de l'atmosphère des tubes de la chambre de séchage 1, lequel comprend un conduit principal 402 comportant une entrée 401 ouverte sur l'extérieur, et permettant la création d'une arrivée d'air vers un extracteur 403, permettant la ventilation forcée du conduit 402 jusqu'à la sortie 405. Le conduit 402 comporte deux jonctions en provenance de la chambre de séchage 1, dont la première jonction avec la canalisation de la sortie 102 de la chambre de séchage 1, et la seconde jonction avec la canalisation de la soupape de sécurité 103. Le système d'extraction 4 permet ainsi l'évacuation de l'atmosphère de la chambre de séchage 1.

Le système d'extraction 4 de l'installation de séchage comporte aussi une sortie 104 situé à la base de la chambre 1, la base ayant une inclinaison de 1%, disposant d'une électrovanne de vidange 104a avec un col de cygne, laquelle permet l'évacuation de l'eau sous forme liquide lors du séchage.

L'installation de séchage intègre en outre un système de pilotage informatique 6 comprenant une interface de programmation applicative API. L'interface de programmation applicative permet d'une part, la gestion de l'envoi des consignes à chacun des composants de l'installation, et d'autre part d'intégrer les données reçues par les différents instruments de mesure métrologique 5, afin d'ajuster les consignes envoyées aux composants de l'installation.

Selon un mode de réalisation particulier, l'installation de séchage conforme à l'invention comprend un système de recyclage du CO₂ permettant la séparation de la vapeur d'eau et du CO₂ gazeux présent dans l'atmosphère extraite de la chambre 1 durant le séchage, afin de pouvoir éliminer l'eau tout en récupérant le CO₂ afin d'être stocké, ou être directement réutilisé dans l'installation.

A titre d'exemple non limitatif, est utilisé un système de recyclage à condensation, diminuant la température du mélange gazeux binaire vapeur d'eau/ CO₂ extrait de la chambre de séchage 1 jusqu'à une température t, permettant la condensation de l'eau du mélange, laquelle est ensuite récupérée par gravité sous forme liquide et éliminée.

Par exemple, le système de recyclage (non représenté) permet la dessiccation de l'atmosphère interne extraite de la chambre de séchage 1 via une installation de condensation thermique de la vapeur d'eau par refroidissement, sur paroi froide équipée d'un échangeur de chaleur. Le système permet donc le recyclage de l'atmosphère déshydratée, laquelle est constituée soit de CO₂ pur, soit par de l'air déshydraté.

Le gaz CO₂ récupéré par le système de recyclage (non représenté) peut être stocké ou directement être réinjecté en complément du "Bloc alimentation CO2".

Selon un mode de réalisation particulier conforme à l'invention, la chambre de séchage 1 dispose d'une longueur de 5,5m par 0,6 m de rayon, soit un volume interne de 1555 litres, le système recirculation dispose d'une longueur de 9m par 0,16 m de rayon, soit un volume interne de 170 litres, et la grume insérée dans la chambre 1 dispose d'une longueur maximale de 5m par 0,46 m de rayon, soit un volume de 1415 litres. L'atmosphère de la chambre de séchage 1 dans lequel circulera le CO2 ainsi que l'eau extraite dispose d'un volume moyen de 310 litres.

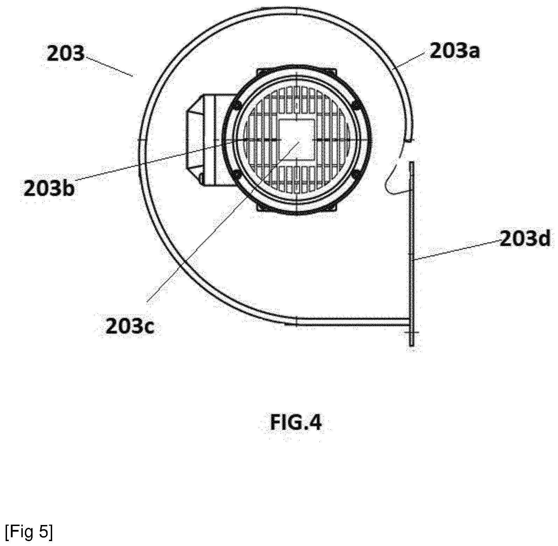

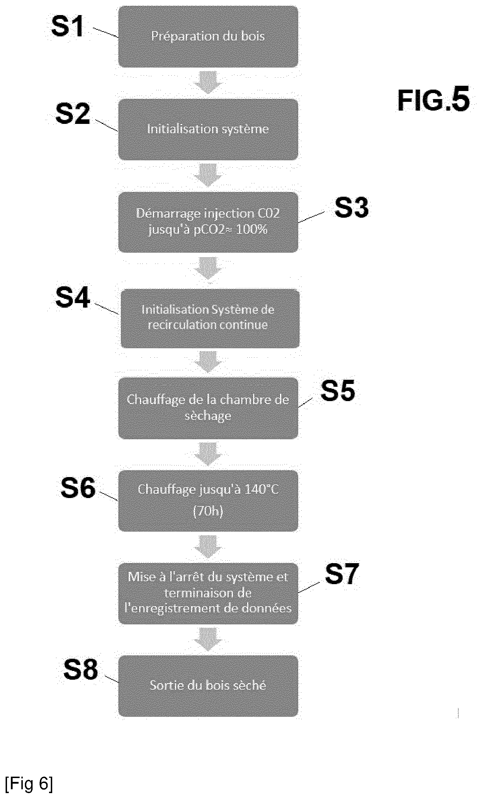

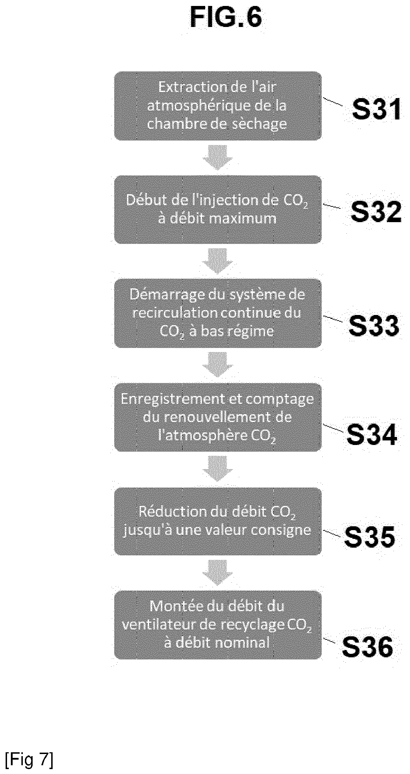

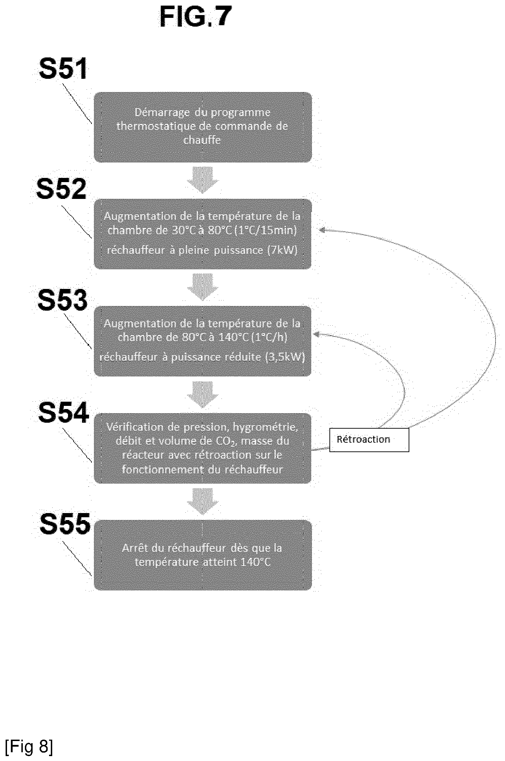

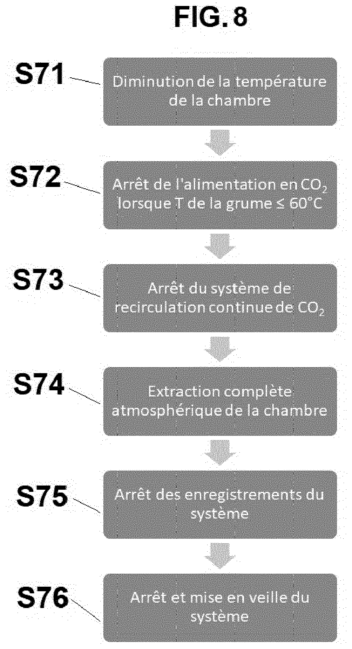

En référence aux **figures 4 à 9****,** l'installation de séchage ainsi décrite en référence aux **figures 1**, **2** **et** **3** met en oeuvre un procédé de séchage comportant une succession d'étapes selon la séquence suivante :
Selon une première étape de préparation du bois ou grume à sécher S1, les grumes sont écorcées et calibrées au gabarit cylindrique sans fourches ni déformation axiale. Le gabarit des grumes peut non limitativement être d'un diamètre maximal de 45 centimètres et de longueur maximale de 5 mètres. La grume est enfournée par poussage sur un chemin de fer à rouleaux et la porte semi étanche du dispositif (non représentés) est refermée et boulonnée ;
Selon une seconde étape d'initialisation S2 de l'installation de séchage, le système de pilotage informatique 6 effectue les tests de mise en tension électrique et de fonctionnement des périphériques suivants mais non limitativement : pesons piézo-électriques de pied de cellule 503a/503b/503c/503d, électrovannes d'admission 304 et d'évacuation du CO2 102a, ventilateur-extracteur de la boucle de recirculation continue CO₂ 203, ventilateur-extracteur du circuit d'évacuation atmosphérique CO₂ 403, thermostat de la cellule de chauffage 210, résistance(s) de la cellule de chauffage 209 et le débitmètre/volumètre d'alimentation en CO₂ 303 ;
Selon une troisième étape de démarrage S3 du système d'alimentation 3 en CO₂ et de mise en circulation 307 de celui-ci, l'installation de séchage est mise en route ;
Selon une quatrième étape d'initialisation du système de recirculation continue du CO₂ S4, la consommation en CO₂ du procédé est réduite ;
Selon une cinquième étape de chauffage S5 de la chambre de séchage 1, la température de l'atmosphère CO₂ est augmentée selon un débit et une vitesse choisie avec la mesure en temps réel de la température en différents points de la chambre, l'hygrométrie, la pression, les pressions partielles en eau et CO₂, le chauffage se faisant à pression atmosphérique ;
Selon une sixième étape de terminaison de chauffage S6, le chauffage est arrêté lorsque la température maximale cible de l'atmosphère de la chambre de séchage 1, soit 140°C pour un temps de séchage de 70 heures est atteinte ou que l'hygrométrie au coeur du bois atteint une valeur cible ;
Selon une septième étape S7, il est prévu de mettre à l'arrêt le système de chauffage 2 ainsi que la terminaison des enregistrements des mesures physiques mesurées lors du chauffage ;
Selon une dernière étape S8, le bois ainsi séché est extrait du tube de la chambre de séchage 1.

Toutes les étapes du procédé après l'étape de préparation du bois S1, sont pilotées et effectuées via une succession de commandes complètement automatisées par le système de pilotage informatique 6 comprenant une interface de programmation applicative API. L'API exécutant un programme de commande, elle envoie différentes consignes à chacun des composants de contrôle et reçoit les données d'enregistrement des instruments métrologiques 5 de l'installation de séchage, lesquelles permettent d'ajuster les composants de contrôle afin d'optimiser le séchage en cas d'écart avec les valeurs consignes.

Les étapes de démarrage des systèmes S3 d'alimentation 3 et de mise en circulation du CO₂ 307, et de démarrage du système S4 de recirculation continue 2 comportent avantageusement des sous-étapes permettant de mettre en oeuvre le procédé conforme à l'invention.

Selon la première sous étape S31, il est prévu le démarrage de l'extracteur 403 d'évacuation atmosphérique CO₂, permettant ainsi l'extraction de l'air atmosphérique de la chambre de séchage 1 à débit minimal.

Le débit minimal et définit comme le débit permettant au système de recirculation 203 de renouveler la totalité de l'atmosphère disponible dans la chambre de séchage 1 en une minute, soit en moyenne 310 Litres.

A titre d'exemple, le débit minimal est de 300 litres par minute.

Cette étape S31 est suivie par une sous étape S32 consistant au démarrage de l'injection de CO₂ par ouverture des électrovannes 304 d'alimentation CO₂ vers le conduit de chauffage 204 jusqu'à obtention d'une saturation définie par un pourcentage de valeur massique en CO₂ choisi dans la chambre de séchage 1.

Selon une troisième sous-étape S33, il est prévu le démarrage du système de recirculation continue des gaz présents dans la chambre de séchage 1 à bas débit, soit par exemple à 300 L/min, ledit démarrage étant déclenché par consigne de démarrage automatique du ventilateur de recirculation continue CO₂.

La sous-étape S33 est suivie d'une sous étape S34 de comptage du renouvellement d'atmosphère CO2 jusqu'à ce que le taux de renouvellement atteigne une valeur de consigne, le volume cumulé calculé étant automatiquement comparé à une valeur consigne, et permettant ainsi de conserver un pourcentage de valeur massique du CO₂ de la chambre 1 entre 95% et 100%.

Afin d'ajuster le taux de renouvellement d'atmosphère CO₂, le procédé de séchage comporte une sous étape de limitation S35, permettant l'ajustement du taux de renouvellement et de volume calculé de CO₂ grâce à la réduction du débit d'alimentation à une valeur donnée par déclenchement d'une première consigne de réduction d'ouverture des électrovannes 304 d'alimentation CO₂, le débit étant surveillé (monitoré) durant sa réduction et comparé automatiquement à une valeur minimale de consigne.

Selon une sous-étape S36 précédent l'étape de chauffage S5, le système de recirculation continue 307 reçoit une consigne de montée automatique au régime nominal d'utilisation du ventilateur de recirculation continue du CO₂, appliquant un débit nominal de 6000 L/min. Le régime nominal est défini comme le régime du système de recirculation permettant d'obtenir une recirculation optimale des gaz de la chambre de séchage 1 avant le début de la phase de chauffage et ainsi permettre la recirculation directe et continue du CO₂ une fois le chauffage initié à débit choisi.

Une fois les systèmes de métrologie 5, d'alimentation en CO₂ 3 et de recirculation continue opérationnels, le procédé décrit conforme à l'invention comporte une étape de chauffage S5 et de terminaison de chauffage S6 comportant une série de sous-étapes permettant un séchage optimal du bois rond.

Selon la première sous-étape S51, il est prévu le démarrage du programme thermostatique de commande de la chauffe lequel est séparé en deux phases de chauffage successives.

Une première phase de chauffage S52, permet la montée de la température moyenne de la chambre de séchage 1 entre la température ambiante, soit par exemple 30°C à une première température consigne 80°C. La montée de température se déroule sur un délai de 10 heures, avec un fonctionnement de la cellule de chauffage à pleine puissance, soit 7 kW, le gradient d'augmentation de température étant par exemple de 6°C par heure. Il s'agit durant cette première phase d'éliminer l'eau libre de la masse de bois.

Selon un mode de réalisation conforme à l'invention, le système de pilotage 6 initie le démarrage automatique des 2 résistances de chauffage du thermoplongeur 209.

Une seconde phase de chauffage S53 commence lorsque la température moyenne de la chambre atteint 80°C. Celle-ci permet l'augmentation de la température moyenne de la chambre jusqu'à une seconde valeur consigne de 140°C, cette seconde phase de chauffage s'effectuant avec un fonctionnement du réchauffeur 205 à puissance réduite, soit 3,5 kW, pour une durée de 60 heures, l'augmentation de la température s'effectuant par exemple à une vitesse de 1°C par heure, ceci afin de réguler plus finement le séchage en lui-même, l'intégrité structurelle du bois à sécher ainsi que l'environnement de séchage dans la chambre de séchage 1. Il s'agit durant cette seconde phase d'éliminer l'eau liée de la masse de bois.

La seconde phase de chauffage prend fin lorsque la température atteint 140°C, ou que le taux d'humidité cible du bois séché est inférieur ou égal à 5%.

La température de chauffage maximale choisie, soit 140°C, permet une efficacité optimale de séchage par substitution CO₂/H₂O, tout en limitant fortement toute atteinte à l'intégrité structurelle du bois à sécher.

En pratique la première phase amenant la température moyenne de la chambre de séchage 1 contenant du CO2 jusqu'à 80°C permet d'extraire l'eau libre du bois à sécher, la seconde phase depuis 80°C jusqu'à 140°C permet d'extraire l'eau liée du bois à sécher.

Au-dessus de 140°C, le Demandeur a observé qu'une modification des composés macromoléculaires du bois s'opère (conformément à la littérature sur le sujet), avec une dégradation des hémicelluloses, une réticulation des lignines ainsi qu'une modification de la structure cristalline de la cellulose, justifiant ainsi que le chauffage selon le procédé conforme à l'invention dispose d'une température maximale de 140°C.

Le profil de séchage est spécifique pour chaque type de bois, chaque type de bois disposant donc d'une courbe d'évolution hygrométrique au coeur du bois en fonction du temps de séchage qui lui est propre et des séquençages de l'augmentation de la température associées spécifiques , lesquels dictent le profil d'augmentation de température à appliquer lors des deux phases de chauffage, et sert de base de comparaison aux mesures métrologiques enregistrées de manière à ce que le système de pilotage 6 rétro ajuste ces mêmes mesures à des valeurs consignes, ceci afin d'obtenir un séchage optimal et de manière industrielle de la charge de bois. Durant chacune des deux phases de chauffage, le thermostat 210 du réchauffeur 205 ainsi que les systèmes d'enregistrement de mesures métrologiques en temps réels, permettent l'ajustement de la puissance du réchauffeur 205 par effet de rétroaction du thermostat 210 sur le réchauffeur 205 ainsi que la modulation des systèmes de circulation du CO2.

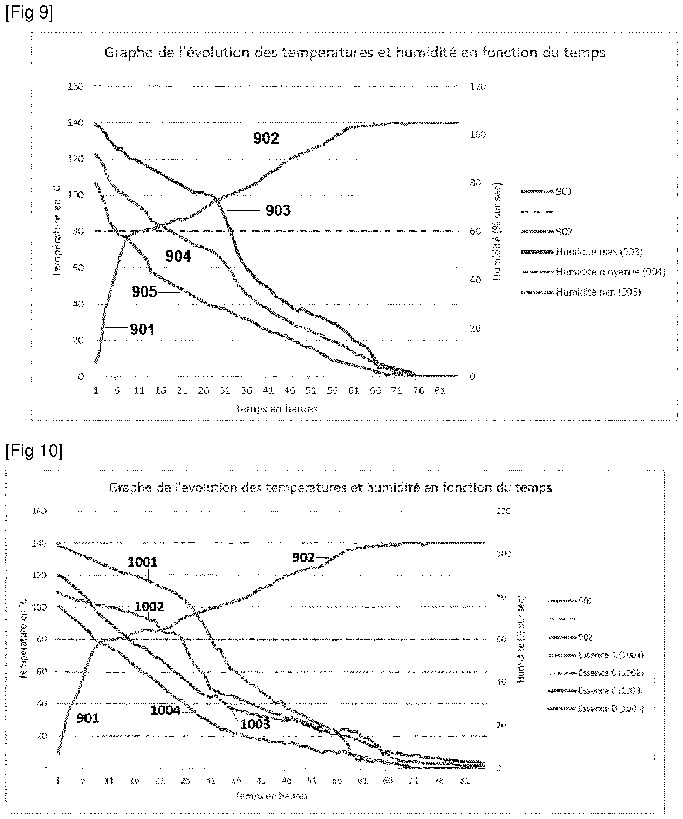

Selon les figures 9 et 10, les gradients de températures de la première phase 901 et de la seconde phase 902 de séchage sont modulés par le système de pilotage 6, de manière à maitriser l'évolution de l'hygrométrie dans le duramen de la pièce de bois en cours de séchage.

En pratique, l'hygrométrie étant variable dans le bois à sécher, sont surveillées par mesures métrologiques : l'hygrométrie moyenne 904, l'hygrométrie minimale 905, et l'hygrométrie maximale 903 par exemple.

L'enregistrement du pilotage des séquences de valeurs consignes associées aux mesures observées permet d'établir un profil hygrométrique de séchage spécifique de l'essence du bois à traiter, et ainsi définir les rétroajustements par le système de pilotage 6 pour les bois de même essence lors d'opérations de séchage ultérieures, et ainsi industrialiser le séchage tout en maintenant la conservation de la structure macromoléculaire du bois séché avec une substitution de l'eau liée par du CO2.

A titre d'exemple non limitatif, les rétroajustements effectués par le système de pilotage 6 sont obtenus par modification du fonctionnement du réchauffeur 205, du système de recirculation continue 203, ou de l'électrovanne de vidange 104a. Ces réajustements permettent d'une part le maintien d'un delta de température maximal de 20°C entre la température enregistrée au coeur du bois et la température de l'atmosphère de la chambre de séchage 1, et d'autre part, d'adapter le séchage d'une essence de bois à un profil spécifique.

Selon la figure 10, on retrouve les profils hygrométriques de quatre essences de bois A 1001, B 1002, C 1003, et D 1004, lesquelles disposent chacune d'une évolution spécifique en fonction du gradient de température selon une première phase jusqu'à 80°C, puis une seconde phase pouvant atteindre 140°C.

La seconde phase de chauffage, permet l'optimisation de la substitution du CO₂ à H₂O liée à la cellulose du bois à sécher. Cette substitution CO₂/H₂O permet de garantir l'intégrité moléculaire « structurelle » du « feuilletage de cellulose », et ainsi du bois séché. Un pilotage multi paramètres fin et précis de l'environnement de séchage, de la température du bois et de la chambre de séchage 1 est donc nécessaire.

L'instrumentation et le pilotage basés sur les mesures métrologiques de l'environnement interne de la chambre de séchage et du bois permettent d'éviter de détériorer le bois durant le séchage, tout séchage induisant un retrait de matière non évitable, bien que minoré par le CO₂ substitué. En cas de mauvais contrôle, la qualité structurelle du bois séché ainsi obtenu peut en être fortement impactée.

Des fissures, ainsi que des affaissements du bois peuvent apparaitre en conséquence d'un mauvais pilotage et ainsi compromettre l'intégrité structurelle du bois séché obtenu par le procédé conforme à l'invention, générant ainsi un produit non conforme à l'invention.

Selon le procédé conforme à l'invention, mais non limitativement, les mesures métrologiques enregistrées en temps réel, lors de la sous étape S54 peuvent être les suivantes :
- la masse du réacteur, permettant de connaitre la masse du bois en cours de séchage et ainsi évaluer l'avancement de l'extraction de la masse d'eau et donc du séchage lui-même ;
- le débit et volume d'alimentation en CO₂ ainsi que la pression atmosphérique différentielle eau/ CO₂, afin d'effectuer un ajustement si la quantité de CO₂ dans la chambre de séchage 1 est trop importante ou non suffisante grâce aux systèmes de recirculation et d'alimentation de CO₂ ;
- la température atmosphérique à la sortie/évacuation de la chambre de séchage, ainsi que celle du bois séché. En effet, lors des deux phases de chauffage, est comparée la température moyenne de l'atmosphère de la chambre de séchage 1 avec la température au coeur du bois comme valeur consigne, sous contrôle du respect du profil de séchage spécifique du bois à sécher à appliquer, appliquant un suivi de la courbe d'évolution hygrométrique au coeur du bois en fonction du temps de séchage et ses séquençages particuliers d'augmentation de la température de l'atmosphère de la chambre de séchage 1. Cette courbe d'évolution suit globalement la fonction 1/x. Si un écart est constaté, et que celui-ci est supérieur à une valeur admissible, l'augmentation de la température est suspendue temporairement jusqu'au retour à un différentiel de température maximum de 20°c entre la température au coeur du bois et la température de l'atmosphère de la chambre de séchage d'une part, et d'autre part, retrouver des valeurs acceptables vis-à-vis du profil de séchage spécifique du bois à sécher;
   - l'hygrométrie atmosphérique dans la cellule de chauffage et à sa sortie/évacuation ; et
   - l'hygrométrie du bois (aubier et duramen).

Si l'une de ces valeurs enregistrées ne se situe pas dans une zone de valeurs initialement prévue à un instant t lors du chauffage, le système de pilotage 6 met en place une rétroaction afin d'ajuster la valeur de la mesure métrologique afin de retourner à une valeur consigne normale satisfaisante dictée par le profil spécifique de chaque type de bois à sécher.

Le séchage s'effectue, au minimum pour la seconde phase, avec un pourcentage massique de CO₂ gazeux dans la chambre de séchage 1 compris entre 95% et 100%. Une fois que la température moyenne de la chambre de séchage 1 atteint la température maximale de 140°C ou que l'hygrométrie du bois au niveau du duramen est conforme à la valeur cible de consigne, par exemple mais non limitativement 5%.

Le système de chauffage 2 est arrêté selon une dernière sous étape S55, laquelle inclue l'arrêt des résistances du réchauffeur 205, les électrovannes d'admission 304 et d'évacuation 102a du CO₂ sont pilotées via une succession de commande du système de pilotage 6 afin de maîtriser et contrôler la diminution de la température de la chambre de séchage 1.

La température moyenne de la chambre de séchage 1 étant définie comme la moyenne entre la température dans le tube de séchage et la température à la sortie de la chambre 102. Le système de pilotage 6 initie ensuite l'étape de mise à l'arrêt S7, avec une sous-étape S71 de diminution de la température moyenne du bois jusqu'à une première valeur consigne de 60°C, le système provoque l'arrêt du système de recirculation continue 203 du CO₂, par diminution automatique du régime de son propre système interne de ventilation jusqu'à un régime bas, soit par exemple permettant l'obtention d'un débit de 300L/min. A partir de 60°C, l'alimentation 3 en CO₂ est arrêtée S72 par fermeture de l'électrovanne d'admission 304 du CO₂ et ouverture de l'orifice d'évent (non représenté) permettant l'admission d'air extérieur dans la chambre de séchage.

Selon une troisième sous-étape S73, le système de pilotage informatique 6 provoque un arrêt du système de recirculation interne 2 du CO2, par diminution automatique du régime du ventilateur du système de recyclage jusqu'à son arrêt complet.

Le système de pilotage 6 procède ensuite à la montée en régime de l'extracteur d'évacuation atmosphérique 403 jusqu'à un débit nominal, soit par exemple 6000L/min, et permettant l'extraction complète S74 de l'atmosphère de la chambre de séchage 1.

Selon un mode de réalisation alternatif conforme à l'invention, le débit nominal est de 1000L/min.

Lorsque la température du bois atteint 40°C, le système procède ensuite à l'arrêt de l'enregistrement S75 des mesures métrologiques 5, puis, lorsque la température atteint 35°C, provoque l'arrêt général d'alimentation électrique des installations S76 et l'activation du voyant de mise en veille de l'instrumentation, l'installation se trouvant donc mise à l'arrêt.

Une fois la mise à l'arrêt de l'installation, le bois peut alors être retiré de la chambre de chauffage.

Le produit ainsi obtenu est donc un bois rond, entier, ou en planches, définit par un taux d'humidité cible inférieur à 5% au niveau du duramen.

## Revendications

1. Procédé de séchage thermique de bois mis en oeuvre à l'aide d'une installation de séchage comprenant au moins une chambre de séchage (1), ledit procédé comprenant les étapes suivantes :
- injecter à l'intérieur de la chambre de séchage (1) un gaz caloporteur comprenant du CO₂ à pression et température choisies;
- forcer la circulation du gaz caloporteur à travers la chambre de séchage (1);
- réchauffer le gaz caloporteur circulant dans la chambre de séchage (1) selon une première phase amenant la température moyenne de la chambre de séchage depuis la température ambiante jusqu'à 80°C selon un gradient de température choisi afin d'extraire l'eau libre du bois à sécher, puis une seconde phase depuis 80°C jusqu'à 140°C en fonction du profil de séchage spécifique du bois à sécher, lequel comprenant un profil d'augmentation de température spécifique et permettant d'extraire l'eau liée spécifique du bois à sécher,
**caractérisé en ce que** le procédé comprend encore les étapes suivantes:
- extraire hors de la chambre de séchage (1) le mélange gazeux binaire comprenant du CO₂ et de l'eau sous forme de vapeur à température élevée et évacuer l'eau ainsi extraite de la charge de bois hors de la chambre (1);
- piloter les étapes d'injection, de circulation, de réchauffage, et d'évacuation selon des programmes, valeurs consignes et des durées de séchage appropriés selon la courbe spécifique d'évolution hygrométrique au coeur du bois en fonction du temps de séchage et des séquençages de l'augmentation de la température propres au type de bois à sécher;
- et collecter l'ensemble des données formées par les variations de mesures physiques métrologiques, les comparer aux valeurs consignes dictés par le profil spécifique du bois à sécher, et réajuster le fonctionnement de l'installation de séchage en cas d'écart avec les valeurs consignes.

2. Procédé selon la revendication 1, **caractérisé en ce que** le bois appartient au groupe formé par bois rond, grume, bois d'oeuvre, bois conformé en planches.

3. Procédé selon la revendication 1 ou 2, **caractérisé en ce que** l'étape d'injection de CO₂ comprend les sous-étapes suivantes :
- Extraction de l'air atmosphérique de la chambre de séchage (1)
- Débuter l'injection de CO₂ à débit choisi ;
- Démarrer la recirculation continue du CO2 à bas régime ;
- Enregistrer et compter le taux de renouvellement de l'atmosphère CO₂ ;
- Réduire le débit d'injection de CO₂ jusqu'à une valeur consigne ; et
- Monter le régime de recirculation continue du CO₂ jusqu'à un régime nominal.

4. Procédé selon l'une quelconque des revendications 1 à 3, **caractérisé en ce que** l'étape de réchauffage dure 70 heures.

5. Procédé selon l'une quelconque des revendications 1 à 4, **caractérisé en ce qu'**il comprend en outre une étape de recyclage du CO₂ permettant la récupération du CO₂ à partir du mélange gazeux vapeur d'eau/ CO₂ extrait de la chambre (1) lors du séchage.

6. Procédé selon l'une quelconque des revendications 1 à 5, **caractérisé en ce que** l'étape de réchauffage comprend les étapes suivantes :
- Démarrer le programme thermostatique de commande de chauffe ;
- Augmenter la température du tube de séchage de la température ambiante à 80°C pendant 10 heures (6°C/h) ;
- Augmenter la température du tube de séchage de 80°C à 140° pendant 60 heures (1°C/h) ;
- Vérifier la pression interne, la pression partielle en eau et CO₂, la température de la chambre (1), la température de la charge de bois au niveau de son aubier et son duramen, la masse du tube de la chambre de séchage, l'hygrométrie, le débit et volume de CO₂, et le taux de renouvellement de l'atmosphère CO₂ en tout temps du chauffage et moduler le paramètre adéquat pour maintenir des valeurs consignes ; et
- Arrêter le chauffage lorsque l'hygrométrie du bois a atteint une valeur cible ou la température moyenne de l'atmosphère de la chambre de séchage atteint 140°C.

7. Procédé selon l'une quelconque des revendications 1 à 6, **caractérisé en ce que** le chauffage est à réaliser à pression atmosphérique, pour un pourcentage massique de CO₂ gazeux dans la chambre compris entre 95% et 100% au moins pour la seconde phase de chauffage.

8. Procédé selon l'une quelconque des revendications 1 à 7, **caractérisé en ce que** l'étape d'arrêt du procédé de séchage comporte les sous-étapes suivantes :
- Diminuer la température de la chambre
- Arrêter l'alimentation en CO₂ lorsque la température du bois est inférieure à 60°C ;
- Arrêter le système de recirculation continue du CO₂
- Extraire complètement l'atmosphère interne de la chambre de séchage (1) ;
- Arrêter les enregistrements de mesures physiques de l'installation ;
- Arrêter et mettre en veille.

9. Procédé selon l'une quelconque des revendications 1 à 8, **caractérisé en ce que** le taux d'humidité cible du bois séché est inférieur ou égal à 5%.

10. Installation de séchage pour la mise en oeuvre du procédé selon l'une quelconque des revendications 1 à 9 comprenant :
- une chambre de séchage (1) comportant au moins un tube de séchage cylindrique creux de diamètre et longueur appropriés pour le séchage de bois de dimensions choisies,
- des moyens d'alimentation en CO₂ (3) pour injecter à l'intérieur de la chambre de séchage (1), un fluide caloporteur sous forme gazeux de CO₂ à pression et température choisies ;
- des moyens circulateurs (307, 203) pour forcer la circulation du fluide gazeux caloporteur à travers la chambre de séchage (1);
- des moyens de chauffage (2) pour réchauffer le fluide gazeux caloporteur,
**caractérisé en ce que** l'installation comprend encore:
- des moyens extracteurs (4) permettant l'extraction de l'atmosphère à l'intérieur de la chambre de séchage 1, et d'extraire et rejeter le fluide gazeux caloporteur comprenant du CO₂ et de l'eau sous forme de vapeur à température ou sous forme liquide ;
- des moyens de métrologie (5) pour mesurer les variations de mesures physiques de l'installation de séchage lors du chauffage ; et
- des moyens de commande (6) pour piloter les moyens d'injection, de circulation, de réchauffage, et d'évacuation selon des programmes, valeurs consignes et durées de séchage appropriés en fonction de la qualité du bois séché recherché, et des moyens de traitement pour mesurer, comparer et réajuster les paramètres de fonctionnement aux valeurs consignes en cas d'écart. 1

## Patentansprüche

1. Verfahren zur thermischen Trocknung von Holz, das mit Hilfe einer Trocknungsanlage mit mindestens einer Trocknungskammer (1) durchgeführt wird, wobei das Verfahren die folgenden Schritte umfasst:
- Einleiten eines CO₂-haltigen Wärmeträgergases mit ausgewähltem Druck und ausgewählter Temperatur in das Innere der Trocknungskammer (1);
- Durchführung der Zwangszirkulation des Wärmeübertragungsgases durch die Trockenkammer (1);
- Erwärmung des in der Trocknungskammer (1) zirkulierenden Wärmeträgergases in einer ersten Phase, in der die Durchschnittstemperatur der Trocknungskammer von der Umgebungstemperatur auf 80° C gemäß einem gewählten Temperaturgradienten erhöht wird, um dem zu trocknenden Holz das freie Wasser zu entziehen, und dann in einer zweiten Phase, in der die Temperatur entsprechend dem spezifischen Trocknungsprofil des zu trocknenden Holzes von 80° C auf 140° C erhöht wird, wobei das Holz ein spezifisches Temperaturanstiegsprofil umfasst, um dem zu trocknenden Holz das spezifische gebundene Wasser zu entziehen, **dadurch gekennzeichnet, dass** das Verfahren darüber hinaus die folgenden Schritte umfasst:
- Abzug des binären CO₂- und wasserhaltigen Gasgemisches aus der Trocknungskammer (1) in Form von Dampf mit hoher Temperatur und Ableiten des so aus der Holzcharge extrahierten Wassers aus der Kammer (1);
- Steuerung der Schritte des Einleitens, der Zirkulation, der Erhitzung und der Ableitung mit geeigneten Programmen, Sollwerten und Trocknungsdauern entsprechend der spezifischen Kurve der Feuchtigkeitsentwicklung im Kern des Holzes in Abhängigkeit von der für die Art des zu trocknenden Holzes typischen Trocknungszeit und Temperaturanstiegssequenzen;
- und Zusammentragen aller Daten, die sich aus den Schwankungen der physikalischen Messungen ergeben, deren Vergleich mit den Sollwerten, die durch das spezifische Profil des zu trocknenden Holzes vorgegeben sind, und das erneute Anpassen des Betriebs der Trocknungsanlage bei Abweichungen von den Sollwerten.

2. Verfahren nach Anspruch 1, **dadurch gekennzeichnet, dass** das Holz zu einer Gruppe gehört, die aus Rundholz, Stammholz, Nutzholz und zu Brettern geformtem Holz besteht.

3. Verfahren nach Anspruch 1 oder 2, **dadurch gekennzeichnet, dass** der Schritt der CO₂-Einleitung die folgenden Teilschritte umfasst:
- Abzug der atmosphärischen Luft aus der Trockenkammer (1)
- Starten der CO₂-Einleitung mit gewähltem Durchsatz;
- Starten der kontinuierlichen CCt-Rezirkulation bei niedriger Umlaufgeschwindigkeit;
- Registrieren und Berechnen der Erneuerungsrate der CO₂-Atmosphäre;
- Verringerung des Durchsatzes der CO₂-Einleitung, bis ein Sollwert erreicht ist; und
- Erhöhung der Geschwindigkeit der kontinuierlichen CCt-Rezirkulation auf eine Nenngeschwindigkeit.

4. Verfahren nach einem der Ansprüche 1 bis 3, **dadurch gekennzeichnet, dass** der Schritt der Erhitzung 70 Stunden dauert.

5. Verfahren nach einem der Ansprüche 1 bis 4, **dadurch gekennzeichnet, dass** es darüber hinaus einen Schritt des CCt-Recyclings umfasst, der die Rückgewinnung des CO₂ aus dem Wasserdampf/CO₂-Gasgemisch ermöglicht, das während des Trocknens aus der Kammer (1) abgezogen wird.

6. Verfahren nach einem der Ansprüche 1 bis 5, **dadurch gekennzeichnet, dass** der Schritt der Erhitzung die folgenden Schritte umfasst:
- Starten des Thermostatprogramms zur Steuerung der Erhitzung;
- Erhöhung der Temperatur des Trockenrohrs über einen Zeitraum von 10 Stunden von Raumtemperatur auf 80° C (6° C/h);
- Erhöhung der Temperatur des Trockenrohrs über einen Zeitraum von 60 Stunden von 80° C auf 140° C (1° C/h);
- Überprüfung des Innendrucks, des Wasser- und CO₂-Partialdrucks, der Temperatur der Kammer (1), der Temperatur der Holzcharge an Splint- und Kernholz, der Masse des Trockenkammerrohrs, der Feuchte, des CCt-Durchsatzes und CO₂-Volumens sowie der Erneuerungsrate der CO₂-Atmosphäre während des gesamten Heizvorgangs und das Abstimmen des entsprechenden Parameters, um die Sollwerte aufrecht zu erhalten; und
- Stoppen der Erhitzung, wenn die Feuchte des Holzes den Zielwert erreicht hat oder die Durchschnittstemperatur der Atmosphäre in der Trockenkammer 140 °C erreicht hat.

7. Verfahren nach einem der Ansprüche 1 bis 6, **dadurch gekennzeichnet, dass** das Erhitzen zumindest in der zweiten Erhitzungsphase bei Atmosphärendruck erfolgt mit einem Massenanteil an CO₂-Gas in der Kammer zwischen 95 % und 100 %.

8. Verfahren nach einem der Ansprüche 1 bis 7, **dadurch gekennzeichnet, dass** der Schritt des Stoppens des Trocknungsprozesses die folgenden Teilschritte umfasst:
- Senken der Temperatur in der Kammer
- Stoppen der CO₂-Zufuhr, wenn das Holz eine Temperatur von unter 60° C hat;
- Stoppen des kontinuierlichen CO₂-Rezirkulationssystems;
- vollständiger ABzug der Innenatmosphäre aus der Trocknungskammer (1);
- Stoppen der physikalischen Messaufzeichnungen der Anlage;
- Herunterfahren der Anlage und Aktivierung des Standby-Modus.

9. Verfahren nach einem der Ansprüche 1 bis 8, **dadurch gekennzeichnet, dass** der Zielwert für den Feuchtigkeitsgehalt des getrockneten Holzes kleiner/ gleich 5 % ist.

10. Trocknungsanlage zur Durchführung des Verfahrens nach einem der Ansprüche 1 bis 9, wobei diese folgendes umfasst:
- eine Trockenkammer (1) mit mindestens einem hohlen zylindrischen Trockenrohr mit einem Durchmesser und einer Länge, die zum Trocknen von Holz mit ausgewählten Abmessungen geeignet sind,
- CO₂-Zuführungsmittel(3), um ein Wärmeübertragungsfluid in Form von gasförmigem CO₂ bei ausgewähltem Druck und ausgewählter Temperatur in das Innere der Trocknungskammer (1) einzuleiten;
- Umlaufmittel (307, 203), um die Zirkulation des gasförmigen Wärmeträgermediums durch die Trocknungskammer (1) zu erzwingen;
- Heizmittel (2) zum Erhitzen des gasförmigen Wärmeträgermediums, **dadurch gekennzeichnet, dass** die Anlage darüber hinaus folgendes umfasst:
- Abzugsmittel (4), um die Atmosphäre aus der Trocknungskammer 1 abzuziehen und das gasförmige Wärmeträgermedium, das CO₂ und Wasser in Form von Dampf mit einer bestimmten Temperatur oder in flüssiger Form enthält, abzuziehen und auszustoßen;
- metrologische Mittel (5) zum Messen von physikalischen Messschwankungen der Trocknungsanlage während des Erhitzens; und
- Steuerungsmittel (6) zum Steuern der Einleitungs-, Zirkulations-, Erhitzungs- und Ableitungsmittel gemäß Programmen, Sollwerten und Trocknungsdauern, die sich für die jeweils gewünschte Qualität des getrockneten Holzes eignen, und Verarbeitungsmittel zum Messen, Vergleichen und Nachstellen der Betriebsparameter im Falle von Abweichungen, damit sie den Sollwerten entsprechen.

## Claims

1. A method of thermally drying wood using a drying plant comprising at least one drying chamber (1), said method comprising the following steps:
- injecting a heat transfer gas comprising CO₂ at a chosen pressure and temperature into the drying chamber (1);
- force the circulation of the heat transfer gas through the drying chamber (1);
- heating the heat transfer gas circulating in the drying chamber (1) according to a first phase bringing the average temperature of the drying chamber from ambient temperature up to 80°C according to a chosen temperature gradient in order to extract the free water from the wood to be dried, then a second phase from 80°C up to 140°C according to the specific drying profile of the wood to be dried, which comprises a specific temperature increase profile and allows to extract the bound water specific to the wood to be dried, **characterised in that** the method further comprises the following steps:
- extracting the binary gas mixture comprising CO₂ and water from the drying chamber (1) in the form of high temperature steam and discharging the water thus extracted from the wood load from the chamber (1);
- control the injection, circulation, reheating and evacuation stages according to programmes, set values and appropriate drying times based on the specific moisture evolution curve at the heart of the wood as a function of the drying time and temperature increase sequencing specific to the type of wood to be dried;
- and collect all the data formed by the variations in physical metrological measurements, compare them with the set values dictated by the specific profile of the wood to be dried, and readjust the operation of the drying installation if there are any deviations from the set values.

2. Method according to claim 1, **characterised in that** the wood belongs to the group formed by round wood, logs, lumber and wood shaped into planks.

3. Method according to claim 1 or 2, **characterised in that** the CO₂ injection step comprises the following sub-steps:
- Extraction of the atmospheric air from the drying chamber (1)
- Start injecting CO₂ at a chosen flow rate;
- Start continuous CO₂ recirculation at low speed;
- Record and count the CO₂ atmosphere renewal rate;
- Reduce the CO₂ injection rate to a set value; and
- Increase the continuous CO₂ recirculation speed to nominal.

4. Method according to any one of claims 1 to 3, **characterized in that** the reheating step lasts 70 hours.

5. Method according to any one of claims 1 to 4, **characterized in that** it furthermore comprises a CO₂ recycling step enabling the CO₂ to be recovered from the water vapour/CO₂ gas mixture extracted from the chamber (1) during drying.

6. Method according to any one of claims 1 to 5, **characterised in that** the reheating step comprises the following steps:
- Start the thermostatic heating control program;
- Increase the temperature of the drying tube from room temperature to 80°C over 10 hours (6°C/h);
- Increase the temperature of the drying tube from 80°C to 140° over 60 hours (1°C/h);
- Check the internal pressure, the partial pressure of water and CO₂, the temperature of the chamber (1), the temperature of the wood load at its sapwood and heartwood level, the mass of the drying chamber tube, the hygrometry, the flow rate and volume of CO₂, and the rate of renewal of the CO₂ atmosphere at all times during heating and modulate the appropriate parameter to maintain the set values; and
- Stop heating when the humidity of the wood has reached a target value or the average temperature of the atmosphere in the drying chamber reaches 140°C.

7. Method according to any one of claims 1 to 6, **characterized in that** the heating is to be carried out at atmospheric pressure, for a percentage by mass of gaseous CO₂ in the chamber of between 95% and 100% at least for the second heating phase.

8. Method according to any one of claims 1 to 7, **characterised in that** the step of stopping the drying process comprises the following sub-steps:
- Reduce the temperature of the chamber
- Stop the CO₂ supply when the temperature of the wood is below 60°C;
- Stop the continuous CO₂ recirculation system
- Completely remove the internal atmosphere from the drying chamber (1);
- Stop recording physical measurements of the installation;
- Stop and standby.

9. Method according to any one of claims 1 to 8, **characterised in that** the target moisture content of the dried wood is less than or equal to 5%.

10. Drying plant for carrying out the process according to any one of claims 1 to 9 comprising:
- a drying chamber (1) comprising at least one hollow cylindrical drying tube of suitable diameter and length for drying wood of selected dimensions,
- CO₂ supply means (3) for injecting a heat transfer fluid in the form of gaseous CO₂ into the drying chamber (1) at a selected pressure and temperature;
- circulator means (307, 203) to force the circulation of the gaseous heat transfer fluid through the drying chamber (1) ;
- heating means (2) for heating the gaseous heat-transfer fluid, **characterised in that** the plant also comprises:
- extractor means (4) for extracting the atmosphere inside the drying chamber 1, and for extracting and discharging the heat-transfer gaseous fluid comprising CO₂ and water in the form of vapour at temperature or in liquid form;
- metrology means (5) for measuring variations in the physical parameters of the drying plant during heating; and
- control means (6) for controlling the injection, circulation, heating and evacuation means according to programmes, set values and drying times appropriate to the quality of the dried wood required, and processing means for measuring, comparing and readjusting the operating parameters to the set values in case of deviations.
